# EUROPÄISCHE PATENTSCHRIFT

(11) **EP 3 866 075 B1**
(45) Veröffentlichungstag und Bekanntmachung des Hinweises auf die Patenterteilung: **21.08.2024**
(21) Anmeldenummer: 20157265.8
(22) Anmeldetag: 13.02.2020
(51) Int. Cl.: G06Q 10/20

(54) **VERFAHREN ZUM AUTOMATISIERTEN ASSISTIEREN BEI DER REPARATUR EINES MOTORANGETRIEBENEN WERKZEUGS UND SYSTEM ZUM AUTOMATISIERTEN ASSISTIEREN BEI DER REPARATUR EINES MOTORANGETRIEBENEN WERKZEUGS**
METHOD FOR AUTOMATED ASSISTANCE IN THE REPAIR OF A MOTOR-DRIVEN TOOL AND SYSTEM FOR AUTOMATED ASSISTANCE IN REPAIRING A MOTOR-DRIVEN TOOL
PROCÉDÉ D'AIDE AUTOMATISÉE LORS DE LA RÉPARATION D'UN OUTIL MOTORISÉ ET SYSTÈME D'AIDE AUTOMATISÉE LORS DE LA RÉPARATION D'UN OUTIL MOTORISÉ

(43) Veröffentlichungstag der Anmeldung: 18.08.2021
(73) Patentinhaber: Andreas Stihl AG & Co. KG, 71336 Waiblingen (DE)
(72) Erfinder: Böcker, Robert, 71336 Waiblingen (DE); Bobert, Martin, 71334 Waiblingen (DE)
(74) Vertreter: Patentanwälte Ruff, Wilhelm, Beier, Dauster & Partner mbB

(56) Entgegenhaltungen:
- EP-A1- 3 424 296
- EP-A1- 3 424 301
- WO-A1-2019/211393
- DE-A1- 102015 109 203
- US-A1- 2016 173 816
- US-A1- 2017 205 791
- US-A1- 2019 010 880

## Beschreibung

### ANWENDUNGSGEBIET UND STAND DER TECHNIK

Die Erfindung bezieht sich auf ein Verfahren zum automatisierten Assistieren bei der Reparatur eines motorangetriebenen Werkzeugs und ein System zum automatisierten Assistieren bei der Reparatur eines motorangetriebenen Werkzeugs.

Die US 2017/0205791 A1 offenbart eine Haushaltsvorrichtung und ein Steuerungsverfahren dafür.

Die WO 2019/211393 A1 offenbart eine Vorrichtung zum Warten und/oder Reparieren einer Baumaschine mit einer mobilen, am Einsatzort der Baumaschine platzierbaren Wartungsstation umfassend einen 3D-Drucker zum Drucken von Ersatzteilen für die Baumaschine anhand von Bauteildaten und/oder eine mobile Anzeigevorrichtung zum Anzeigen von Reparaturinformation an der Baumaschine anhand von Bauteildaten, wobei eine von der Wartungsstation örtlich getrennte Datenversorgungsstation vorgesehen ist, die über eine Kommunikationsverbindung mit der Wartungsstation verbindbar und dazu konfiguriert ist, der Wartungsstation 3D-Druckdaten zum Drucken des Ersatzteils bereitzustellen, und die Wartungsstation dazu konfiguriert ist, anhand der von der Datenversorgungsstation empfangenen 3D-Druckdaten das Ersatzteil schichtweise zu drucken.

Die EP 3 424 301 A1 offenbart ein Verfahren zum Ermitteln eines Verschmutzungszustands mindestens einer Komponente eines Garten- und/oder Forstgeräts und ein Garten- und/oder Forstgerätesystem.

### AUFGABE UND LÖSUNG

Der Erfindung liegt als Aufgabe die Bereitstellung eines Verfahrens zum automatisierten Assistieren bei der Reparatur eines motorangetriebenen Werkzeugs und eines Systems zum automatisierten Assistieren bei der Reparatur eines motorangetriebenen Werkzeugs zugrunde.

Die Erfindung löst diese Aufgabe durch die Bereitstellung eines Verfahrens mit den Merkmalen des Anspruchs 1 und/oder eines Systems mit den Merkmalen des Anspruchs 11. Vorteilhafte Weiterbildungen und/oder Ausgestaltungen der Erfindung sind in den abhängigen Ansprüchen beschrieben.

Das erfindungsgemäße Verfahren ist zum automatisierten Assistieren bei der Reparatur, insbesondere der Reparatur-Annahme, eines motorangetriebenen Werkzeugs ausgebildet bzw. konfiguriert. Das Werkzeug ist ein Garten-, Forst- und/oder Bauwerkzeug. Das Verfahren umfasst bzw. weist die Schritte auf: a) Ermitteln, insbesondere automatisiertes Ermitteln, insbesondere Erfassen und/oder Empfangen, von mindestens einer Betriebsrandbedingung, insbesondere eines Werts der Betriebsrandbedingung, des Werkzeugs, wobei das Werkzeug unter bzw. bei dieser Betriebsrandbedingung zuvor nicht, insbesondere mehr, bestimmungsgemäß oder sogar nicht, insbesondere mehr, funktioniert hat. b) Bestimmen, insbesondere automatisiertes Bestimmen, eines Satzes von möglichen bzw. wahrscheinlichen Fehlersymptomen des Werkzeugs basierend auf der ermittelten Betriebsrandbedingung. c) Ausgeben, insbesondere automatisiertes Ausgeben, des bestimmten Satzes von möglichen Fehlersymptomen, insbesondere an bzw. für einen Benutzer und/oder einen Reparateur des Werkzeugs.

Dies, insbesondere das Ermitteln der Betriebsrandbedingung, ermöglicht das Bestimmen des Satzes von möglichen Fehlersymptomen mittelbar. Zusätzlich oder alternativ ermöglicht dies, insbesondere das Ausgeben des bestimmten Satzes von möglichen Fehlersymptomen, dass die Reparatur schnell und somit kostengünstig oder sogar überhaupt ausgeführt werden kann, insbesondere durch den Reparateur.

Insbesondere kann das Werkzeug ein handgeführtes, insbesondere handgetragenes, Werkzeug sein. Insbesondere kann handgeführtes, insbesondere handgetragenes, Werkzeug bedeuten, dass das Werkzeug eine Masse von maximal 50 Kilogramm (kg), insbesondere von maximal 20 kg, insbesondere von maximal 10 kg, insbesondere von maximal 5 kg, und/oder von minimal 1 kg, insbesondere von minimal 2 kg, aufweisen kann.

Das Ermitteln wird mittels einer Ermittlungseinrichtung ausgeführt. Insbesondere kann die Ermittlungseinrichtung getrennt von dem Werkzeug ausgebildet sein. In anderen Worten: die Ermittlungseinrichtung braucht oder kann kein Bestandteil des Werkzeugs sein.

Die Betriebsrandbedingung kann derart sein, dass das Bestimmen des Satzes von möglichen Fehlersymptomen ermöglicht sein kann. In anderen Worten: die Betriebsrandbedingung kann relevant für die nicht-bestimmungsgemäße Funktion des Werkzeugs sein. Zusätzlich oder alternativ kann mindestens eine weitere, insbesondere für die nicht-bestimmungsgemäße Funktion des Werkzeugs nicht-relevante bzw. irrelevante, Betriebsrandbedingung ermittelt werden.

Basierend auf der ermittelten Betriebsrandbedingung, insbesondere dem ermittelten Wert der Betriebsrandbedingung, kann der Satz von möglichen Fehlersymptomen des Werkzeugs und basierend auf einer anderen ermittelten Betriebsrandbedingung, insbesondere einem anderen ermittelten Wert der Betriebsrandbedingung, kann ein anderer Satz von möglichen anderen Fehlersymptomen des Werkzeugs bestimmt werden.

Der Satz kann mindestens, insbesondere nur, ein, insbesondere einziges, mögliches Fehlersymptom aufweisen. Zusätzlich oder alternativ kann ein weiterer Satz von unwahrscheinlichen Fehlersymptomen des Werkzeugs, insbesondere nicht bestimmt basierend auf der ermittelten Betriebsrandbedingung, ausgegeben werden, insbesondere derart, dass zwischen dem Satz und dem weiteren Satz unterschieden werden kann, insbesondere durch den Benutzer und/oder den Reparateur, wie z.B. mittels einer Priorisierung.

Das Ausgeben kann ein akustisches und/oder optisches Ausgeben, insbesondere ein Anzeigen, aufweisen.

Der Schritt b) kann zeitlich nach dem Schritt a) ausgeführt werden. Zusätzlich oder alternativ kann der Schritt c) zeitlich nach dem Schritt b) ausgeführt werden.

Die Betriebsrandbedingung umfasst bzw. weist eine meteorologische Kenngröße, insbesondere einen Luftdruck, eine Luftfeuchtigkeit, einen Niederschlag und/oder eine Temperatur, und/oder eine Höhe und/oder eine Position einer Betriebsumgebung des Werkzeugs auf. Insbesondere kann die Höhe über dem Meeresspiegel sein. Dies ermöglicht das Bestimmen des Satzes von möglichen Fehlersymptomen des Werkzeugs besonders gut. In anderen Worten: die derartige Betriebsrandbedingung kann besonders relevant für die nicht-bestimmungsgemäße Funktion des Werkzeugs sein.

Das Verfahren umfasst bzw. weist die Schritte auf: Ermitteln, insbesondere automatisiertes Ermitteln, insbesondere Empfangen, von mindestens einer Betriebsbedingung, insbesondere eines Werts der Betriebsbedingung, insbesondere einer Betriebs-Drehzahl-Häufigkeitsverteilung, insbesondere von Werten der Betriebs-Drehzahl-Häufigkeitsverteilung, des Werkzeugs, insbesondere bis das Werkzeug nicht, insbesondere mehr, bestimmungsgemäß oder sogar nicht, insbesondere mehr, funktioniert hat. Bestimmen, insbesondere automatisiertes Bestimmen, des Satzes von möglichen bzw. wahrscheinlichen Fehlersymptomen des Werkzeugs basierend auf der ermittelten Betriebsbedingung. Ausgeben, insbesondere automatisiertes Ausgeben, des bestimmten Satzes von möglichen Fehlersymptomen, insbesondere an bzw. für den Benutzer und/oder den Reparateur.

Dies, insbesondere das Ermitteln der Betriebsbedingung, ermöglicht das Bestimmen des Satzes von möglichen Fehlersymptomen mittelbar. Zusätzlich oder alternativ ermöglicht dies, insbesondere das Ausgeben des bestimmten Satzes von möglichen Fehlersymptomen, dass die Reparatur schnell und somit kostengünstig oder sogar überhaupt ausgeführt werden kann, insbesondere durch den Reparateur.

Insbesondere braucht oder kann die mindestens eine Betriebsbedingung kein Fehler sein. Zusätzlich oder alternativ können die mindestens eine Betriebsrandbedingung und die mindestens eine Betriebsbedingung verschieden, insbesondere verschiedenartig, sein.

Die Betriebsbedingung kann derart sein, dass das Bestimmen des Satzes von möglichen Fehlersymptomen ermöglicht sein kann. In anderen Worten: die Betriebsbedingung kann relevant für die nicht-bestimmungsgemäße Funktion des Werkzeugs sein. Zusätzlich oder alternativ kann mindestens eine weitere, insbesondere für die nicht-bestimmungsgemäße Funktion des Werkzeugs nicht-relevante bzw. irrelevante, Betriebsbedingung ermittelt werden.

Basierend auf der ermittelten Betriebsbedingung, insbesondere dem ermittelten Wert der Betriebsbedingung, kann der Satz von möglichen Fehlersymptomen des Werkzeugs und basierend auf einer anderen ermittelten Betriebsbedingung, insbesondere einem anderen ermittelten Wert der Betriebsbedingung, kann ein anderer Satz von möglichen anderen Fehlersymptomen des Werkzeugs bestimmt werden.

Der Satz kann mindestens, insbesondere nur, ein, insbesondere einziges, mögliches Fehlersymptom aufweisen. Zusätzlich oder alternativ kann ein weiterer Satz von unwahrscheinlichen Fehlersymptomen des Werkzeugs, insbesondere nicht bestimmt basierend auf der ermittelten Betriebsrandbedingung, ausgegeben werden, insbesondere derart, dass zwischen dem Satz und dem weiteren Satz unterschieden werden kann, insbesondere durch den Benutzer und/oder den Reparateur, wie z.B. mittels einer Priorisierung.

Das Ausgeben kann ein akustisches und/oder optisches Ausgeben, insbesondere ein Anzeigen, aufweisen.

Das Bestimmen kann zeitlich nach dem Ermitteln ausgeführt werden. Zusätzlich oder alternativ kann das Ausgeben zeitlich nach dem Bestimmen ausgeführt werden.

Das Werkzeug umfasst bzw. weist keinen, insbesondere elektrischen, Fehlersensor und/oder keinen, insbesondere elektrischen, Fehlerspeicher auf. Dies ermöglicht, dass das Werkzeug einfach und somit kostengünstig ausgebildet sein kann.

Der Satz von möglichen Fehlersymptomen ist benutzerauswählbar. Das Verfahren umfasst bzw. weist die Schritte auf: d) Auswählen bzw. Selektieren, insbesondere nur, eines, insbesondere einzigen, Fehlersymptoms aus dem bestimmten, insbesondere und ausgegebenen, benutzerauswählbaren Satz von möglichen Fehlersymptomen, insbesondere durch den Benutzer und/oder den Reparateur. e) Bestimmen, insbesondere automatisiertes Bestimmen, eines Satzes von möglichen bzw. wahrscheinlichen Fehlerursachen des Werkzeugs und/oder möglichen bzw. wahrscheinlichen Reparaturhandlungsanweisungen und/oder möglichen bzw. wahrscheinlichen Ersatzteilen für das Werkzeug basierend auf dem ausgewählten Fehlersymptom, f) Ausgeben, insbesondere automatisiertes Ausgeben, des bestimmten Satzes von möglichen Fehlerursachen und/oder möglichen Reparaturhandlungsanweisungen und/oder möglichen Ersatzteilen, insbesondere an bzw. für den Benutzer und/oder den Reparateur. Dies ermöglicht, dass die Reparatur besonders schnell und somit besonders kostengünstig ausgeführt werden kann. Insbesondere kann basierend auf dem ausgewählten Fehlersymptom der Satz von möglichen Fehlerursachen des Werkzeugs und/oder möglichen Reparaturhandlungsanweisungen und/oder möglichen Ersatzteilen für das Werkzeug und basierend auf einem anderen ausgewählten Fehlersymptom kann ein anderer Satz von möglichen anderen Fehlerursachen des Werkzeugs und/oder möglichen anderen Reparaturhandlungsanweisungen und/oder möglichen anderen Ersatzteilen für das Werkzeug bestimmt werden. Zusätzlich oder alternativ kann der Satz mindestens, insbesondere nur, eine, insbesondere einzige, mögliche Fehlerursache und/oder mindestens, insbesondere nur, eine, insbesondere einzige, mögliche Reparaturhandlungsanweisung und/oder mindestens, insbesondere nur, ein, insbesondere einziges, mögliches Ersatzteil aufweisen. Weiter zusätzlich oder alternativ kann ein weiterer Satz von unwahrscheinlichen Fehlerursachen des Werkzeugs und/oder unwahrscheinlichen Reparaturhandlungsanweisungen und/oder unwahrscheinlichen Ersatzteilen für das Werkzeug, insbesondere nicht bestimmt basierend auf dem ausgewählten Fehlersymptom, ausgegeben werden, insbesondere derart, dass zwischen dem Satz und dem weiteren Satz unterschieden werden kann, insbesondere durch den Benutzer und/oder den Reparateur, wie z.B. mittels einer Priorisierung. Weiter zusätzlich oder alternativ kann das Ausgeben ein akustisches und/oder optisches Ausgeben, insbesondere ein Anzeigen, aufweisen. Weiter zusätzlich oder alternativ kann der Schritt d) zeitlich nach dem Schritt c) ausgeführt werden. Weiter zusätzlich oder alternativ kann der Schritt e) zeitlich nach dem Schritt d) ausgeführt werden. Weiter zusätzlich oder alternativ kann der Schritt f) zeitlich nach dem Schritt e) ausgeführt werden.

In einer Ausgestaltung der Erfindung umfasst bzw. weist der Schritt a) auf: Ermitteln, insbesondere automatisiertes Ermitteln, insbesondere Erfassen, einer Höhe, insbesondere eines Werts der Höhe, und/oder einer Position, insbesondere eines Werts der Position, einer Betriebsumgebung des Werkzeugs und Ermitteln, insbesondere automatisiertes Ermitteln, insbesondere Empfangen, der meteorologischen Kenngröße basierend auf der ermittelten Höhe und/oder der ermittelten Position. Dies ermöglicht das Ermitteln der meteorologischen Kenngröße mittelbar.

In einer Weiterbildung der Erfindung umfasst bzw. weist das Werkzeug ein Verbrennungsmotorantriebssystem auf. Das Verbrennungsmotorantriebssystem hat unter dieser Betriebsrandbedingung zuvor nicht bestimmungsgemäß funktioniert. Der Satz ist von möglichen Fehlersymptomen und/oder möglichen Fehlerursachen des Verbrennungsmotorantriebssystems und/oder möglichen Reparaturhandlungsanweisungen und/oder möglichen Ersatzteilen für das Verbrennungsmotorantriebssystem. Insbesondere kann für die nicht-bestimmungsgemäße Funktion des Verbrennungsmotorantriebssystems die meteorologische Kenngröße, insbesondere besonders, relevant sein. Zusätzlich oder alternativ kann das Werkzeug ein Bearbeitungswerkzeug aufweisen und das Verbrennungsmotorantriebssystem kann zum Antrieb des Bearbeitungswerkzeugs ausgebildet sein.

In einer Ausgestaltung der Erfindung umfasst bzw. weist das Verbrennungsmotorantriebssystem einen Gemischaufbereiter, insbesondere einen Vergaser, und/oder eine Zündkerze und/oder ein Ventil, insbesondere ein Kraftstoffeinlassventil, insbesondere ein Kraftstoffeinspritzventil, und/oder eine Kupplung auf.

In einer Weiterbildung der Erfindung ist das Werkzeug eine Säge, ein Hoch-Entaster, ein Freischneider, eine Heckenschere, ein Heckenschneider, ein Blasgerät, ein Laubbläser, eine Astschere, ein Trennschleifer, ein Kehrgerät, eine Kehrwalze, eine Kehrbürste, ein Rasenmäher, ein Vertikutierer, eine Grasschere, ein Häcksler, ein Gesteinsschneider, ein Hochdruckreiniger oder ein Spritz- und/oder Sprühgerät.

In einer Weiterbildung der Erfindung umfasst bzw. weist das Verfahren den Schritt auf: Ermitteln, insbesondere automatisiertes Ermitteln, insbesondere Erfassen und/oder Empfangen, eines Typs des Werkzeugs. Das Verfahren umfasst bzw. weist auf: Bestimmen, insbesondere automatisches Bestimmen, des Satzes von möglichen Fehlersymptomen und/oder möglichen Fehlerursachen und/oder möglichen Reparaturhandlungsanweisungen und/oder möglichen Ersatzteilen basierend auf dem ermittelten Typ. Dies ermöglicht ein Bestimmen, insbesondere und ein Ausgeben, von nicht-relevanten, insbesondere unmöglichen, Fehlersymptomen und/oder nicht-relevanten, insbesondere unmöglichen, Fehlerursachen und/oder nicht-relevanten, insbesondere unmöglichen, Reparaturhandlungsanweisungen und/oder nicht-relevanten, insbesondere unmöglichen, Ersatzteilen für den ermittelten Typ zu vermeiden. Insbesondere kann der Typ des Werkzeugs aus einer Menge von verschiedenen Typen von motorangetriebenen Werkzeugen sein.

In einer Ausgestaltung der Erfindung umfasst bzw. weist das Ermitteln des Typs des Werkzeugs auf: Auswählen, insbesondere automatisiertes Auswählen, bzw. Selektieren, insbesondere nur, des, insbesondere einzigen, Typs des Werkzeugs aus einer Menge von verschiedenen Typen von motorangetriebenen Werkzeugen, insbesondere durch den Benutzer und/oder den Reparateur. Dies ermöglicht eine hohe Benutzer- und/oder Reparateur-Freundlichkeit.

In einer Weiterbildung, insbesondere einer Ausgestaltung, der Erfindung umfasst bzw. weist das Bestimmen auf: Selektieren, insbesondere automatisiertes Selektieren, bzw. Auswählen des Satzes von möglichen Fehlersymptomen aus einer Menge von verschiedenen Fehlersymptomen, wobei den Fehlersymptomen jeweils mindestens eine Betriebsrandbedingung, insbesondere ein Wert der Betriebsrandbedingung, aus einer Menge von verschiedenen Betriebsrandbedingungen, insbesondere verschiedenen Werten der Betriebsrandbedingung, insbesondere und mindestens ein Typ eines Werkzeugs aus einer Menge von verschiedenen Typen von Werkzeugen, soweit vorhanden, zugeordnet sind. Zusätzlich oder alternativ umfasst bzw. weist das Bestimmen auf: Selektieren, insbesondere automatisiertes Selektieren, bzw. Auswählen des Satzes von möglichen Fehlerursachen und/oder möglichen Reparaturhandlungsanweisungen und/oder möglichen Ersatzteilen aus einer Menge von verschiedenen Fehlerursachen und/oder verschiedenen Reparaturhandlungsanweisungen und/oder verschiedenen Ersatzteilen, wobei den Fehlerursachen und/oder den Reparaturhandlungsanweisungen und/oder den Ersatzteilen jeweils mindestens eine Betriebsrandbedingung, insbesondere ein Wert der Betriebsrandbedingung, aus einer Menge von verschiedenen Betriebsrandbedingungen, insbesondere verschiedenen Werten der Betriebsrandbedingung, und/oder mindestens ein Fehlersymptom aus einer Menge von verschiedenen Fehlersymptomen, soweit vorhanden, insbesondere und mindestens ein Typ eines Werkzeugs aus einer Menge von verschiedenen Typen von Werkzeugen, soweit vorhanden, zugeordnet sind. Dies ermöglicht das Bestimmen des Satzes von möglichen Fehlersymptomen und/oder möglichen Fehlerursachen und/oder möglichen Reparaturhandlungsanweisungen und/oder möglichen Ersatzteilen basierend auf der ermittelten Betriebsrandbedingung und/oder dem ausgewählten Fehlersymptom, insbesondere und dem ermittelten Typ.

In einer Ausgestaltung der Erfindung umfasst bzw. weist das Verfahren die Schritte auf: Ermitteln eines tatsächlichen Fehlersymptoms und/oder einer tatsächlichen Fehlerursache des Werkzeugs und/oder einer tatsächlichen Reparaturhandlungsanweisung und/oder eines tatsächlichen Ersatzteils für das Werkzeug, insbesondere durch den Benutzer und/oder den Reparateur, insbesondere zeitlich mit und/oder zeitlich nach der Reparatur. Zuordnen, insbesondere automatisiertes Zuordnen, der mindestens einen Betriebsrandbedingung zu dem ermittelten tatsächlichen Fehlersymptom und/oder der mindestens einen Betriebsrandbedingung und/oder des, insbesondere ausgewählten und/oder tatsächlichen, Fehlersymptoms, soweit vorhanden, zu der ermittelten tatsächlichen Fehlerursache und/oder zu der ermittelten tatsächlichen Reparaturhandlungsanweisung und/oder zu dem ermittelten tatsächlichen Ersatzteil für ein nächstes Ausführen des Verfahrens. Dies ermöglicht das Verfahren, insbesondere nach und nach, zu verfeinern. Insbesondere kann das Ermitteln des tatsächlichen Fehlersymptoms und/oder der tatsächlichen Fehlerursache und/oder der tatsächlichen Reparaturhandlungsanweisung und/oder des tatsächlichen Ersatzteils ein Bestätigen oder ein Ändern des bestimmten, insbesondere und ausgegebenen, Satzes von möglichen Fehlersymptomen und/oder möglichen Fehlerursachen und/oder möglichen Reparaturhandlungsanweisungen und/oder möglichen Ersatzteilen aufweisen.

Das erfindungsgemäße, insbesondere elektrische, System ist zum automatisierten Assistieren bei der Reparatur, insbesondere der Reparatur-Annahme, eines, insbesondere des, motorangetriebenen Werkzeugs, insbesondere zum Ausführen des Verfahrens wie zuvor beschrieben, ausgebildet bzw. konfiguriert. Das Werkzeug ist ein, insbesondere das, Garten-, Forst- und/oder Bauwerkzeug. Das System umfasst bzw. weist eine, insbesondere elektrische, Ermittlungseinrichtung, eine, insbesondere elektrische, Bestimmungseinrichtung und eine, insbesondere elektrische, Ausgabeeinrichtung auf. Die Ermittlungseinrichtung ist zum, insbesondere automatisierten, Ermitteln von mindestens einer, insbesondere der mindestens einen, Betriebsrandbedingung des Werkzeugs, wobei das Werkzeug unter dieser Betriebsrandbedingung zuvor nicht bestimmungsgemäß funktioniert hat, wobei die Betriebsrandbedingung eine, insbesondere die, meteorologische Kenngröße und/oder eine, insbesondere die, Höhe und/oder eine, insbesondere die, Position einer, insbesondere der, Betriebsumgebung des Werkzeugs umfasst bzw. aufweist, und von mindestens einer, insbesondere der mindestens einen, Betriebsbedingung, insbesondere einer, insbesondere der, Betriebs-Drehzahl-Häufigkeitsverteilung, des Werkzeugs, insbesondere bis das Werkzeug nicht bestimmungsgemäß funktioniert hat, ausgebildet bzw. konfiguriert. Die Bestimmungseinrichtung ist zum, insbesondere automatisierten, Bestimmen eines, insbesondere des, Satzes von möglichen Fehlersymptomen des Werkzeugs basierend auf der ermittelten Betriebsrandbedingung und der ermittelten Betriebsbedingung ausgebildet bzw. konfiguriert. Die Ausgabeeinrichtung ist zum, insbesondere automatisierten, Ausgeben des bestimmten Satzes von möglichen Fehlersymptomen, insbesondere an bzw. für den Benutzer und/oder den Reparateur, ausgebildet bzw. konfiguriert. Der Satz von möglichen Fehlersymptomen ist benutzerauswählbar. Die Ermittlungseinrichtung ist zum Auswählen eines, insbesondere des, Fehlersymptoms aus dem bestimmten benutzerauswählbaren Satz von möglichen Fehlersymptomen ausgebildet. Die Bestimmungseinrichtung ist zum Bestimmen eines, insbesondere des, Satzes von möglichen Fehlerursachen des Werkzeugs und/oder möglichen Reparaturhandlungsanweisungen und/oder möglichen Ersatzteilen für das Werkzeug basierend auf dem ausgewählten Fehlersymptom ausgebildet. Die Ausgabeeinrichtung ist zum Ausgeben des bestimmten Satzes von möglichen Fehlerursachen und/oder möglichen Reparaturhandlungsanweisungen und/oder möglichen Ersatzteilen ausgebildet. Das Werkzeug weist keinen Fehlersensor und/oder keinen Fehlerspeicher auf.

Insbesondere kann das System ein mobiles, insbesondere portables bzw. handgetragenes, Gerät aufweisen, wobei das Gerät die Ermittlungseinrichtung, die Bestimmungseinrichtung und/oder die Ausgabeeinrichtung aufweisen kann. Insbesondere kann das mobile Gerät ein Smartphone und/oder eine Smartwatch aufweisen, insbesondere sein. Zusätzlich oder alternativ kann das mobile Gerät getrennt von dem Werkzeug ausgebildet sein. In anderen Worten: das mobile Gerät braucht oder kann kein Bestandteil des Werkzeugs sein.

In einer Weiterbildung der Erfindung umfasst bzw. weist das System das Werkzeug auf.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine schematische Ansicht eines erfindungsgemäßen Verfahrens und eines erfindungsgemäßen Systems,
- Fig. 2: eine schematische Ansicht eines Teils des Verfahrens der Fig. 1 und einer Ermittlungseinrichtung und einer Ausgabeeinrichtung des Systems der Fig. 1,
- Fig. 3: eine weitere schematische Ansicht eines Teils des Verfahrens der Fig. 1 und einer Bestimmungseinrichtung des Systems der Fig. 1,
- Fig. 4: eine nochmals weitere schematische Ansicht eines Teils des Verfahrens der Fig. 1 und einer weiteren Ausgabeeinrichtung des Systems der Fig. 1,
- Fig. 5: eine schematische Ansicht einer Betriebsbedingung eines motorangetriebenen Werkzeugs des Systems der Fig. 1,
- Fig. 6: eine nochmals weitere schematische Ansicht eines Teils des Verfahrens der Fig. 1 und der Bestimmungseinrichtung des Systems der Fig. 1, und
- Fig. 7: eine schematische Explosionsansicht eines weiteren motorangetriebenen Werkzeugs des Systems der Fig. 1.

### DETAILLIERTE BESCHREIBUNG DER AUSFÜHRUNGSBEISPIELE

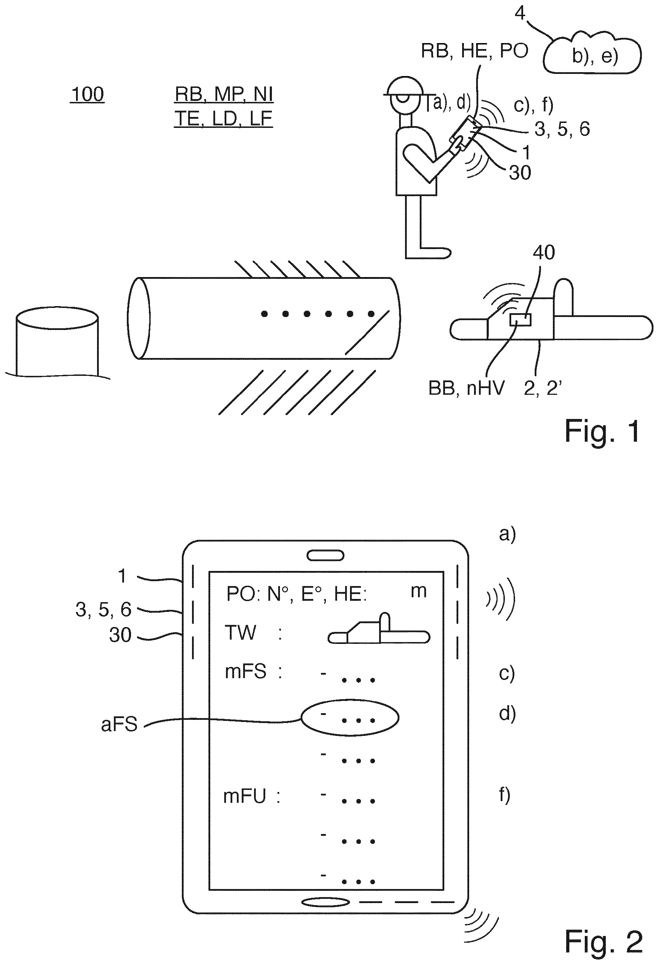

Fig. 1 bis 4, 6 und 7 zeigen ein erfindungsgemäßes System 1 und ein erfindungsgemäßes Verfahren zum automatisierten Assistieren bei der Reparatur eines motorangetriebenen Werkzeugs 2. Das System 1 weist eine Ermittlungseinrichtung 3, eine Bestimmungseinrichtung 4 und eine Ausgabeeinrichtung 5, in dem gezeigten Ausführungsbeispiel zwei Ausgabeeinrichtungen 5, auf. Die Ermittlungseinrichtung 3 ist zum Ermitteln von mindestens einer Betriebsrandbedingung RB des Werkzeugs 2, wobei das Werkzeug 2 unter dieser Betriebsrandbedingung RB zuvor nicht bestimmungsgemäß funktioniert hat, ausgebildet. Die Bestimmungseinrichtung 4 ist zum Bestimmen eines Satzes von möglichen Fehlersymptomen mFS und/oder möglichen Fehlerursachen mFU des Werkzeugs 2 und/oder möglichen Reparaturhandlungsanweisungen mRA und/oder möglichen Ersatzteilen mET für das Werkzeug 2 basierend auf der ermittelten Betriebsrandbedingung RB ausgebildet. Die Ausgabeeinrichtung 5 ist zum Ausgeben des bestimmten Satzes von möglichen Fehlersymptomen mFS und/oder möglichen Fehlerursachen mFU und/oder möglichen Reparaturhandlungsanweisungen mRA und/oder möglichen Ersatzteilen mET ausgebildet.

Das Verfahren weist die Schritte auf: a) Ermitteln der mindestens einen Betriebsrandbedingung RB des Werkzeugs 2, wobei das Werkzeug 2 unter dieser Betriebsrandbedingung RB zuvor nicht bestimmungsgemäß funktioniert hat, insbesondere mittels der Ermittlungseinrichtung 3, wie in Fig. 1, 2 und 7 gezeigt. b) Bestimmen des Satzes von möglichen Fehlersymptomen mFS und/oder möglichen Fehlerursachen mFU des Werkzeugs 2 und/oder möglichen Reparaturhandlungsanweisungen mRA und/oder möglichen Ersatzteilen mET für das Werkzeug 2 basierend auf der ermittelten Betriebsrandbedingung RB, insbesondere mittels der Bestimmungseinrichtung 4, wie in Fig. 1, 3 und 7 gezeigt. c) Ausgeben des bestimmten Satzes von möglichen Fehlersymptomen mFS und/oder möglichen Fehlerursachen mFU und/oder möglichen Reparaturhandlungsanweisungen mRA und/oder möglichen Ersatzteilen mET, insbesondere mittels der Ausgabeeinrichtung 5, insbesondere an bzw. für einen Benutzer und/oder einen Reparateur des Werkzeugs 2, wie in Fig. 1, 2, 4 und 7 gezeigt.

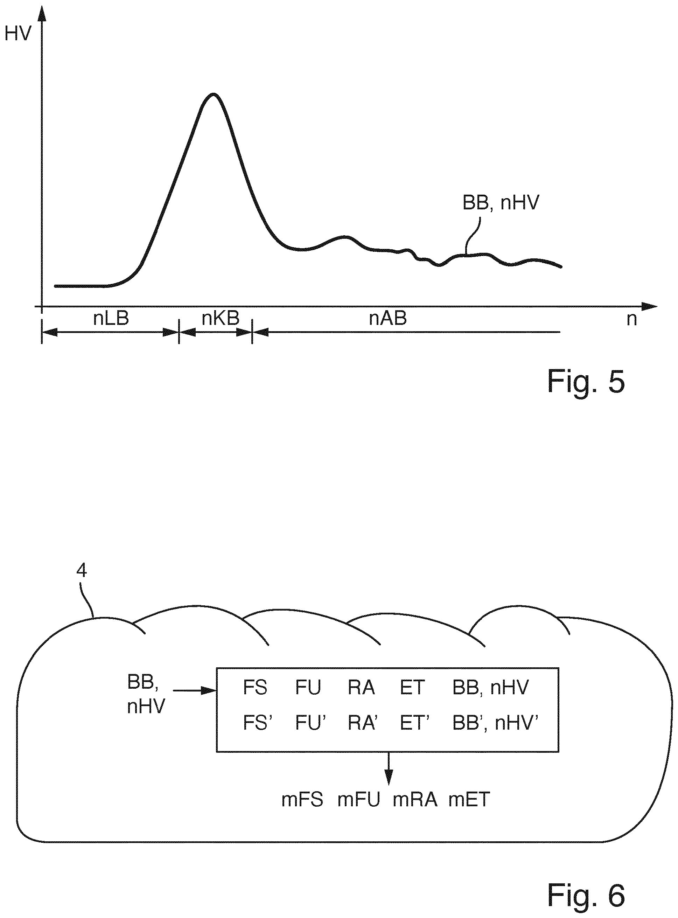

Zusätzlich oder alternativ weist das Verfahren die Schritte auf: Ermitteln von mindestens einer Betriebsbedingung BB, in dem gezeigten Ausführungsbeispiel einer Betriebs-Drehzahl-Häufigkeitsverteilung nHV, wie in Fig. 5 gezeigt, des Werkzeugs 2, insbesondere bis das Werkzeug 2 nicht bestimmungsgemäß funktioniert hat, insbesondere mittels der Ermittlungseinrichtung 3, wie in Fig. 1 und 2 gezeigt. Bestimmen des Satzes von möglichen Fehlersymptomen mFS und/oder möglichen Fehlerursachen mFU des Werkzeugs 2 und/oder möglichen Reparaturhandlungsanweisungen mRA und/oder möglichen Ersatzteilen mET für das Werkzeug 2 basierend auf der ermittelten Betriebsbedingung BB, insbesondere mittels der Bestimmungseinrichtung 4, wie in Fig. 1 und 6 gezeigt. Ausgeben des bestimmten Satzes von möglichen Fehlersymptomen mFS und/oder möglichen Fehlerursachen mFU und/oder möglichen Reparaturhandlungsanweisungen mRA und/oder möglichen Ersatzteilen mET, insbesondere mittels der Ausgabeeinrichtung 5.

In dem gezeigten Ausführungsbeispiel weist das System 1 ein mobiles Gerät 30, insbesondere in Form eines Smartphones, auf. Das mobile Gerät 30 weist die Ermittlungseinrichtung 3 und eine der Ausgabeeinrichtungen 5, insbesondere in Form einer Anzeige, auf.

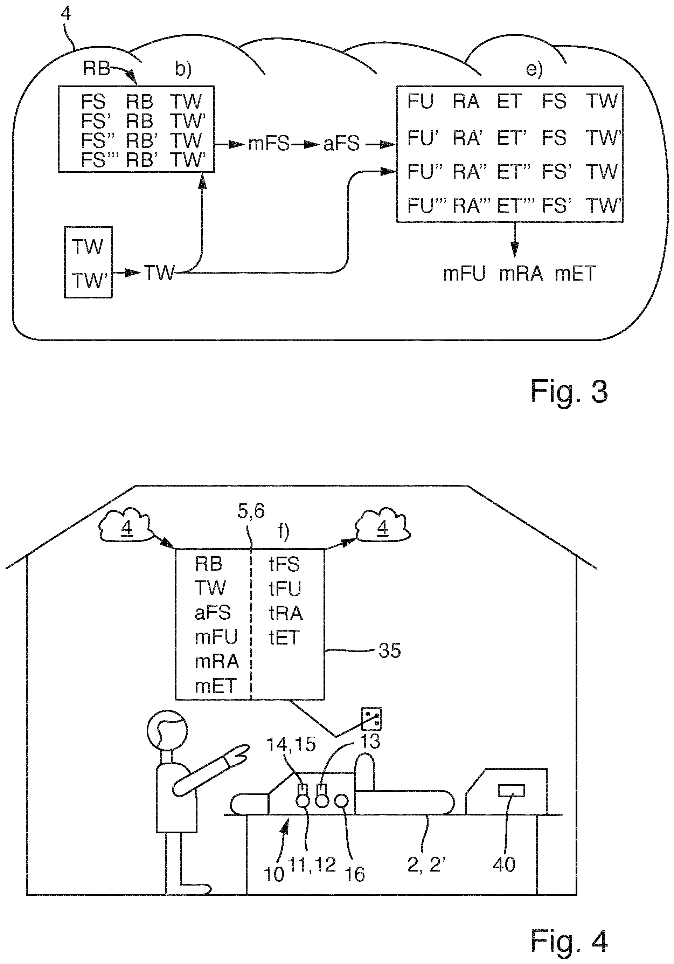

Des Weiteren weist das System 1 ein stationäres Gerät 35, insbesondere in Form eines Computers, auf, insbesondere in einer Werkstatt, wie in Fig. 4 gezeigt. Das stationäre Gerät 35 weist eine der Ausgabeeinrichtungen 5, insbesondere in Form einer Anzeige, auf.

Außerdem ist die Bestimmungseinrichtung 4 in Form eines Cloud-Servers.

Weiter sind die Ermittlungseinrichtung 3 und die Bestimmungseinrichtung 4 zum, insbesondere drahtlosen, Übertragen der ermittelten Betriebsrandbedingung RB und/oder der ermittelten Betriebsbedingung BB ausgebildet, insbesondere übertragen.

Zudem sind die Bestimmungseinrichtung 4 und die Ausgabeeinrichtung 5 zum, insbesondere drahtlosen, Übertragen des bestimmten Satzes von möglichen Fehlersymptomen mFS und/oder möglichen Fehlerursachen mFU und/oder möglichen Reparaturhandlungsanweisungen mRA und/oder möglichen Ersatzteilen mET ausgebildet, insbesondere übertragen.

Des Weiteren weist das System 1 das Werkzeug 2 auf.

In dem gezeigten Ausführungsbeispiel weist das Werkzeug 2 einen Betriebsbedingungsspeicher 40 zum Speichern der mindestens einen Betriebsbedingung BB auf, wie in Fig. 1 und 4 gezeigt. Die Ermittlungseinrichtung 3 und der Betriebsbedingungsspeicher 40 sind zum, insbesondere drahtlosen, Übertragen der Betriebsbedingung BB ausgebildet, insbesondere übertragen.

Im Detail weist das Werkzeug 2 keinen Fehlersensor und/oder keinen Fehlerspeicher auf.

In Fig. 1 bis 6 ist das Werkzeug 2 eine Säge 2`.

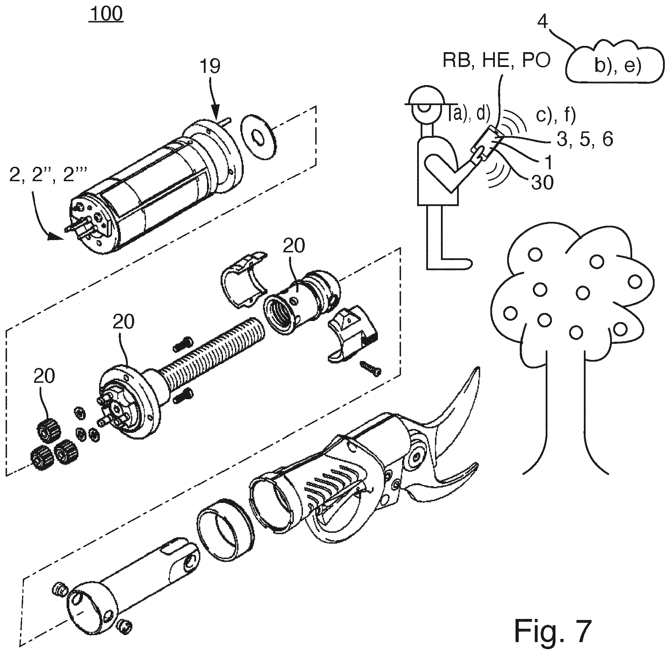

In Fig. 7 ist das Werkzeug 2 eine Astschere 2".

Außerdem weist in Fig. 7 das Werkzeug 2 ein Elektromotorantriebssystem 19 auf. Das Elektromotorantriebssystem 19 hat unter dieser Betriebsrandbedingung RB zuvor nicht bestimmungsgemäß funktioniert. Der Satz ist von möglichen Fehlersymptomen mFS und/oder möglichen Fehlerursachen mFU des Elektromotorantriebssystems 19 und/oder möglichen Reparaturhandlungsanweisungen mRA und/oder möglichen Ersatzteilen mET für das Elektromotorantriebssystem 19.

Im Detail weist das Elektromotorantriebssystem 19 ein Getriebe 20, insbesondere eine Kugelumlaufspindel, eine Kugelumlaufmutter und/oder einen Ritzelsatz, auf.

Insbesondere ist in Fig. 7 das Werkzeug 2 ein Akkuwerkzeug 2‴.

Weiter weist in Fig. 1 bis 6 das Werkzeug 2 ein Verbrennungsmotorantriebssystem 10 auf. Das Verbrennungsmotorantriebssystem 10 hat unter dieser Betriebsrandbedingung RB zuvor nicht bestimmungsgemäß funktioniert. Der Satz ist von möglichen Fehlersymptomen mFS und/oder möglichen Fehlerursachen mFU des Verbrennungsmotorantriebssystems 10 und/oder möglichen Reparaturhandlungsanweisungen mRA und/oder möglichen Ersatzteilen mET für das Verbrennungsmotorantriebssystem 10.

Im Detail weist das Verbrennungsmotorantriebssystem 10 einen Gemischaufbereiter 11, insbesondere einen Vergaser 12, und/oder eine Zündkerze 13 und/oder ein Ventil 14, insbesondere ein Kraftstoffeinlassventil 15, und/oder eine Kupplung 16 auf.

Zudem weist das Verfahren den Schritt auf: Ermitteln eines Typs TW des Werkzeugs 2, insbesondere mittels der Ermittlungseinrichtung 3. Das Verfahren weist auf: Bestimmen des Satzes von möglichen Fehlersymptomen mFS und/oder möglichen Fehlerursachen mFU und/oder möglichen Reparaturhandlungsanweisungen mRA und/oder möglichen Ersatzteilen mET basierend auf dem ermittelten Typ TW, insbesondere mittels der Bestimmungseinrichtung 4.

Im Detail weist das Ermitteln des Typs TW des Werkzeugs 2 auf: Auswählen des Typs TW des Werkzeugs 2 aus einer Menge von verschiedenen Typen TW, TW' von motorangetriebenen Werkzeugen 2.

In dem gezeigten Ausführungsbeispiel wählt der Benutzer den Typ TW des Werkzeugs 2 aus, insbesondere durch Betätigen einer Eingabeeinrichtung 6, insbesondere in Form eines Touchscreens, insbesondere des Systems 1, insbesondere des mobilen Geräts 30, wie in Fig. 1 und 7 gezeigt.

In alternativen Ausführungsbeispielen können die Ermittlungseinrichtung und das Werkzeug, insbesondere der Betriebsbedingungsspeicher, zum, insbesondere drahtlosen, Übertragen einer Kennzeichnung, insbesondere des Werkzeugs und/oder des Typs des Werkzeugs, insbesondere einer Seriennummer, zum Ermitteln des Typs des Werkzeugs ausgebildet sein, insbesondere übertragen. Zusätzlich oder alternativ kann in alternativen Ausführungsbeispielen das System, insbesondere die Ermittlungseinrichtung eine Kamera aufweisen, wobei die Kamera zum Aufnehmen eines Bilds des Werkzeugs zum Ermitteln des Typs des Werkzeugs ausgebildet sein kann, insbesondere aufnehmen.

Des Weiteren ist der Satz von möglichen Fehlersymptomen mFS benutzerauswählbar. Das Verfahren weist die Schritte auf: d) Auswählen eines Fehlersymptoms aFS aus dem bestimmten benutzerauswählbaren Satz von möglichen Fehlersymptomen mFS, insbesondere mittels der Ermittlungseinrichtung 3. e) Bestimmen eines Satzes von möglichen Fehlerursachen mFU des Werkzeugs 2 und/oder möglichen Reparaturhandlungsanweisungen mRA und/oder möglichen Ersatzteilen mET für das Werkzeug 2 basierend auf dem ausgewählten Fehlersymptom aFS, insbesondere mittels der Bestimmungseinrichtung 4. f) Ausgeben des bestimmten Satzes von möglichen Fehlerursachen mFU und/oder möglichen Reparaturhandlungsanweisungen mRA und/oder möglichen Ersatzteilen mET, insbesondere mittels der Ausgabeeinrichtung 5.

In dem gezeigten Ausführungsbeispiel wählt der Benutzer das Fehlersymptom aFS aus, insbesondere durch Betätigen der Eingabeeinrichtung 6, wie in Fig. 1 und 7 gezeigt.

Außerdem weist die Betriebsrandbedingung RB eine meteorologische Kenngröße MP, insbesondere einen Luftdruck LD, eine Luftfeuchtigkeit LF, einen Niederschlag NI und/oder eine Temperatur TE, und/oder eine Höhe HE und/oder eine Position PO einer Betriebsumgebung 100 des Werkzeugs 2 auf, wie in Fig. 1 und 7 gezeigt.

Im Detail weist der Schritt a) auf: Ermitteln einer Höhe HE und/oder einer Position PO einer Betriebsumgebung 100 des Werkzeugs 2 und Ermitteln der meteorologischen Kenngröße MP basierend auf der ermittelten Höhe HE und/oder der ermittelten Position PO, insbesondere mittels der Ermittlungseinrichtung 3.

In dem gezeigten Ausführungsbeispiel weist die Ermittlungseinrichtung 3 einen Höhenmesser zum Ermitteln der Höhe HE und/oder eine Positionsermittlungseinrichtung bzw. eine Positionsbestimmungseinrichtung, insbesondere einen Satelliten-Positionsbestimmungsempfänger, zum Ermitteln der Position PO auf.

In alternativen Ausführungsbeispielen kann die Ermittlungseinrichtung einen Luftdruckmesser zum Ermitteln des Luftdrucks, einen Luftfeuchtigkeitsmesser zum Ermitteln der Luftfeuchtigkeit, einen Niederschlagsmesser zum Ermitteln des Niederschlags und/oder ein Thermometer zum Ermitteln der Temperatur aufweisen.

Weiter ist in dem gezeigten Ausführungsbeispiel die Ermittlungseinrichtung 3 zum, insbesondere drahtlosen, Empfangen der Betriebsrandbedingung RB, insbesondere der meteorologischen Kenngröße MP, basierend auf der ermittelten Höhe HE und/oder der ermittelten Position PO ausgebildet, insbesondere empfängt.

In Fig. 1 ist die Höhe HE relativ hoch und somit der Luftdruck LD relativ niedrig. Somit wird als Satz von möglichen Fehlersymptomen mFS *"Werkzeug startet schlecht oder nicht"* und/oder von möglichen Fehlerursachen *"Gemischaufbereiter, insbesondere Vergaser, und*/*oder Zündkerze defekt"* und/oder möglichen Reparaturhandlungsanweisungen *"Gemischaufbereiter, insbesondere Vergaser, und*/*oder Zündkerze reparieren"* und/oder möglichen Ersatzteilen *"Gemischaufbereiter, insbesondere Vergaser, und*/*oder Zündkerze"* bestimmt und ausgegeben.

In einem anderen Fall, nämlich falls die Höhe relativ niedrig und somit der Luftdruck relativ hoch wäre, würde als Satz von möglichen Fehlersymptomen *"Werkzeug geht nach dem Start oder im Leerlauf aus"* und/oder von möglichen Fehlerursachen *"Ventil defekt"* und/oder möglichen Reparaturhandlungsanweisungen *"Ventil reparieren"* und/oder möglichen Ersatzteilen *"Ventil"* bestimmt und ausgegeben.

In Fig. 5 weist die Betriebs-Drehzahl-Häufigkeitsverteilung nHV eine relativ niedrige Häufigkeit in einem Leerlauf-Drehzahl-Bereich nLB, eine relativ hohe Häufigkeit in einem KupplungsDrehzahl-Bereich nKB und eine relativ niedrige Häufigkeit in einem Arbeits-Drehzahl-Bereich nAB auf. Somit wird als Satz von möglichen Fehlersymptomen mFS *"Werkzeug startet, aber arbeitet nicht"* und/oder von möglichen Fehlerursachen "*Kupplung defekt"* und/oder möglichen Reparaturhandlungsanweisungen "*Kupplung reparieren"* und/oder möglichen Ersatzteilen *"Kupplung"* bestimmt und ausgegeben.

In Fig. 7 ist die Position PO eine Orangenplantage. Somit ist ein möglicher bzw. wahrscheinlicher Werkstoff eines mittels des Werkzeugs 2 zu bearbeitenden möglichen bzw. wahrscheinlichen Werkstücks ein sehr hartes Holz, insbesondere anders als in einem Weinberg. Somit wird als Satz von möglichen Fehlersymptomen mFS "*Klingen der Astschere fahren nicht mehr vollständig auf bzw. zu"* und/oder von möglichen Fehlerursachen *"Getriebe, insbesondere Kugelumlaufspindel, Kugelumlaufmutter und*/*oder Ritzelsatz, defekt"* und/oder möglichen Reparaturhandlungsanweisungen *"Getriebe, insbesondere Kugelumlaufspindel, Kugelumlaufmutter und*/*oder Ritzelsatz, reparieren"* und/oder möglichen Ersatzteilen *"Getriebe, insbesondere Kugelumlaufspindel, Kugelumlaufmutter und*/*oder Ritzelsatz"* bestimmt und ausgegeben.

In anderen Worten: die Betriebsrandbedingung kann einen möglichen bzw. wahrscheinlichen Werkstoff eines mittels des Werkzeugs zu bearbeitenden möglichen bzw. wahrscheinlichen Werkstücks aufweisen. Insbesondere kann der Schritt a) aufweisen: Ermitteln einer Höhe und/oder einer Position einer Betriebsumgebung des Werkzeugs und Ermitteln des Werkstoffs basierend auf der ermittelten Höhe und/oder der ermittelten Position.

Zudem weist das Bestimmen auf: Selektieren des Satzes von möglichen Fehlersymptomen mFS aus einer Menge von verschiedenen Fehlersymptomen FS, FS', FS", FS‴, wobei den Fehlersymptomen FS, FS', FS", FS‴ jeweils mindestens eine Betriebsrandbedingung RB, RB' aus einer Menge von verschiedenen Betriebsrandbedingungen RB, RB' und/oder mindestens eine Betriebsbedingung BB, BB` aus einer Menge von verschiedenen Betriebsbedingungen BB, BB`, insbesondere und mindestens ein Typ TW, TW' eines Werkzeugs 2 aus einer Menge von verschiedenen Typen TW, TW' von Werkzeugen 2, zugeordnet sind, insbesondere mittels der Bestimmungseinrichtung 4, wie in Fig. 3 und 6 gezeigt.

Zusätzlich weist das Bestimmen auf: Selektieren des Satzes von möglichen Fehlerursachen mFU und/oder möglichen Reparaturhandlungsanweisungen mRA und/oder möglichen Ersatzteilen mET aus einer Menge von verschiedenen Fehlerursachen FU, FU`, FU", FU‴ und/oder verschiedenen Reparaturhandlungsanweisungen RA, RA`, RA", RA‴ und/oder verschiedenen Ersatzteilen ET, ET', ET", ET‴, wobei den Fehlerursachen FU, FU`, FU", FU‴ und/oder den Reparaturhandlungsanweisungen RA, RA', RA", RA‴ und/oder den Ersatzteilen ET, ET', ET", ET‴ jeweils mindestens eine Betriebsrandbedingung RB, RB' aus einer Menge von verschiedenen Betriebsrandbedingungen RB, RB' und/oder mindestens eine Betriebsbedingung BB, BB` aus einer Menge von verschiedenen Betriebsbedingungen BB, BB` und/oder mindestens ein Fehlersymptom FS, FS' aus einer Menge von verschiedenen Fehlersymptomen FS, FS', insbesondere und mindestens ein Typ TW, TW' eines Werkzeugs 2 aus einer Menge von verschiedenen Typen TW, TW' von Werkzeugen 2, zugeordnet sind, insbesondere mittels der Bestimmungseinrichtung 4.

Weiter weist das Verfahren die Schritte auf: Ermitteln eines tatsächlichen Fehlersymptoms tFS und/oder einer tatsächlichen Fehlerursache tFU des Werkzeugs 2 und/oder einer tatsächlichen Reparaturhandlungsanweisung tRA und/oder eines tatsächlichen Ersatzteils tET für das Werkzeug 2, wie in Fig. 4 gezeigt. Zuordnen der mindestens einen Betriebsrandbedingung RB zu dem ermittelten tatsächlichen Fehlersymptom tFS und/oder der mindestens einen Betriebsrandbedingung RB und/oder des, insbesondere ausgewählten und/oder tatsächlichen, Fehlersymptoms aFS, tFS zu der ermittelten tatsächlichen Fehlerursache tFU und/oder zu der ermittelten tatsächlichen Reparaturhandlungsanweisung tRA und/oder zu dem ermittelten tatsächlichen Ersatzteil tET für ein nächstes Ausführen des Verfahrens, insbesondere mittels der Bestimmungseinrichtung 4.

In dem gezeigten Ausführungsbeispiel bestätigt oder ändert der Reparateur das tatsächliche Fehlersymptom tFS und/oder die tatsächliche Fehlerursache tFU des Werkzeugs 2 und/oder die tatsächliche Reparaturhandlungsanweisung tRA und/oder das tatsächliche Ersatzteil tET für das Werkzeug 2, insbesondere durch Betätigen einer, insbesondere weiteren, Eingabeeinrichtung 6, insbesondere in Form eines Touchscreens, insbesondere des Systems 1, insbesondere des stationären Geräts 35.

Wie die gezeigten und oben erläuterten Ausführungsbeispiele deutlich machen, stellt die Erfindung ein vorteilhaftes Verfahren zum automatisierten Assistieren bei der Reparatur eines motorangetriebenen Werkzeugs und ein vorteilhaftes System zum automatisierten Assistieren bei der Reparatur eines motorangetriebenen Werkzeugs bereit.

## Patentansprüche

1. Verfahren zum automatisierten Assistieren bei der Reparatur eines motorangetriebenen Werkzeugs (2), wobei das Werkzeug (2) ein Garten-, Forst- und/oder Bauwerkzeug ist, wobei das Verfahren die Schritte aufweist:
a) Ermitteln von mindestens einer Betriebsrandbedingung (RB) des Werkzeugs (2), wobei das Werkzeug (2) unter dieser Betriebsrandbedingung (RB) zuvor nicht bestimmungsgemäß funktioniert hat, wobei die Betriebsrandbedingung (RB) eine meteorologische Kenngröße (MP) und/oder eine Höhe (HE) und/oder eine Position (PO) einer Betriebsumgebung (100) des Werkzeugs (2) aufweist, und von mindestens einer Betriebsbedingung (BB), insbesondere einer Betriebs-Drehzahl-Häufigkeitsverteilung (nHV), des Werkzeugs (2), insbesondere bis das Werkzeug (2) nicht bestimmungsgemäß funktioniert hat, mittels einer Ermittlungseinrichtung (3),
b) Bestimmen eines Satzes von möglichen Fehlersymptomen (mFS) des Werkzeugs (2) basierend auf der ermittelten Betriebsrandbedingung (RB) und der ermittelten Betriebsbedingung (BB), und
c) Ausgeben des bestimmten Satzes von möglichen Fehlersymptomen (mFS), **gekennzeichnet durch** folgende Merkmale:
- wobei der Satz von möglichen Fehlersymptomen (mFS) benutzerauswählbar ist, und
- wobei das Verfahren die Schritte aufweist:
d) Auswählen eines Fehlersymptoms (aFS) aus dem bestimmten benutzerauswählbaren Satz von möglichen Fehlersymptomen (mFS),
e) Bestimmen eines Satzes von möglichen Fehlerursachen (mFU) des Werkzeugs (2) und/oder möglichen Reparaturhandlungsanweisungen (mRA) und/oder möglichen Ersatzteilen (mET) für das Werkzeug (2) basierend auf dem ausgewählten Fehlersymptom (aFS), und
f) Ausgeben des bestimmten Satzes von möglichen Fehlerursachen (mFU) und/oder möglichen Reparaturhandlungsanweisungen (mRA) und/oder möglichen Ersatzteilen (mET),
- wobei das Werkzeug (2) keinen Fehlersensor und/oder keinen Fehlerspeicher aufweist.

2. Verfahren nach Anspruch 1,
- wobei die meteorologische Kenngröße (MP) einen Luftdruck (LD), eine Luftfeuchtigkeit (LF), einen Niederschlag (NI) und/oder eine Temperatur (TE) aufweist.

3. Verfahren nach einem der vorhergehenden Ansprüche,
- wobei der Schritt a) aufweist: Ermitteln einer Höhe (HE) und/oder einer Position (PO) einer Betriebsumgebung (100) des Werkzeugs (2) und Ermitteln der meteorologischen Kenngröße (MP) basierend auf der ermittelten Höhe (HE) und/oder der ermittelten Position (PO).

4. Verfahren nach einem der vorhergehenden Ansprüche,
- wobei das Werkzeug (2) ein Verbrennungsmotorantriebssystem (10) aufweist,
- wobei das Verbrennungsmotorantriebssystem (10) unter dieser Betriebsrandbedingung (RB) zuvor nicht bestimmungsgemäß funktioniert hat,
- wobei der Satz von möglichen Fehlersymptomen (mFS) und/oder möglichen Fehlerursachen (mFU) des Verbrennungsmotorantriebssystems (10) und/oder möglichen Reparaturhandlungsanweisungen (mRA) und/oder möglichen Ersatzteilen (mET) für das Verbrennungsmotorantriebssystem (10) ist.

5. Verfahren nach Anspruch 4,
- wobei das Verbrennungsmotorantriebssystem (10) einen Gemischaufbereiter (11), insbesondere einen Vergaser (12), und/oder eine Zündkerze (13) und/oder ein Ventil (14), insbesondere ein Kraftstoffeinlassventil (15), und/oder eine Kupplung (16) aufweist.

6. Verfahren nach einem der vorhergehenden Ansprüche,
- wobei das Werkzeug (2) eine Säge (2'), ein Hoch-Entaster, ein Freischneider, eine Heckenschere, ein Heckenschneider, ein Blasgerät, ein Laubbläser, eine Astschere (2"), ein Trennschleifer, ein Kehrgerät, eine Kehrwalze, eine Kehrbürste, ein Rasenmäher, ein Vertikutierer, eine Grasschere, ein Häcksler, ein Gesteinsschneider, ein Hochdruckreiniger oder ein Spritz- und/oder Sprühgerät ist.

7. Verfahren nach einem der vorhergehenden Ansprüche,
- wobei das Verfahren den Schritt aufweist: Ermitteln eines Typs (TW) des Werkzeugs (2), und
- wobei das Verfahren aufweist: Bestimmen des Satzes von möglichen Fehlersymptomen (mFS) und/oder möglichen Fehlerursachen (mFU) und/oder möglichen Reparaturhandlungsanweisungen (mRA) und/oder möglichen Ersatzteilen (mET) basierend auf dem ermittelten Typ (TW).

8. Verfahren nach Anspruch 7,
- wobei das Ermitteln des Typs (TW) des Werkzeugs (2) aufweist: Auswählen des Typs (TW) des Werkzeugs (2) aus einer Menge von verschiedenen Typen (TW, TW') von motorangetriebenen Werkzeugen (2).

9. Verfahren nach einem der vorhergehenden Ansprüche, insbesondere nach Anspruch 7 und/oder 8,
- wobei das Bestimmen aufweist: Selektieren des Satzes von möglichen Fehlersymptomen (mFS) aus einer Menge von verschiedenen Fehlersymptomen (FS, FS', FS", FS‴), wobei den Fehlersymptomen (FS, FS`, FS", FS‴) jeweils mindestens eine Betriebsrandbedingung (RB, RB`) aus einer Menge von verschiedenen Betriebsrandbedingungen (RB, RB`), insbesondere und mindestens ein Typ (TW, TW`) eines Werkzeugs (2) aus einer Menge von verschiedenen Typen (TW, TW') von Werkzeugen (2), zugeordnet sind, und/oder
- wobei das Bestimmen aufweist: Selektieren des Satzes von möglichen Fehlerursachen (mFU) und/oder möglichen Reparaturhandlungsanweisungen (mRA) und/oder möglichen Ersatzteilen (mET) aus einer Menge von verschiedenen Fehlerursachen (FU, FU`, FU", FU‴) und/oder verschiedenen Reparaturhandlungsanweisungen (RA, RA`, RA", RA‴) und/oder verschiedenen Ersatzteilen (ET, ET`, ET", ET‴), wobei den Fehlerursachen (FU, FU`, FU", FU‴) und/oder den Reparaturhandlungsanweisungen (RA, RA`, RA", RA‴) und/oder den Ersatzteilen (ET, ET', ET", ET‴) jeweils mindestens eine Betriebsrandbedingung (RB, RB`) aus einer Menge von verschiedenen Betriebsrandbedingungen (RB, RB`) und/oder mindestens ein Fehlersymptom (FS, FS') aus einer Menge von verschiedenen Fehlersymptomen (FS, FS'), insbesondere und mindestens ein Typ (TW, TW`) eines Werkzeugs (2) aus einer Menge von verschiedenen Typen (TW, TW') von Werkzeugen (2), zugeordnet sind.

10. Verfahren nach Anspruch 9,
- wobei das Verfahren die Schritte aufweist:
- Ermitteln eines tatsächlichen Fehlersymptoms (tFS) und/oder einer tatsächlichen Fehlerursache (tFU) des Werkzeugs (2) und/oder einer tatsächlichen Reparaturhandlungsanweisung (tRA) und/oder eines tatsächlichen Ersatzteils (tET) für das Werkzeug (2), und
- Zuordnen der mindestens einen Betriebsrandbedingung (RB) zu dem ermittelten tatsächlichen Fehlersymptom (tFS) und/oder der mindestens einen Betriebsrandbedingung (RB) und/oder des Fehlersymptoms (aFS, tFS) zu der ermittelten tatsächlichen Fehlerursache (tFU) und/oder zu der ermittelten tatsächlichen Reparaturhandlungsanweisung (tRA) und/oder zu dem ermittelten tatsächlichen Ersatzteil (tET) für ein nächstes Ausführen des Verfahrens.

11. System (1) zum automatisierten Assistieren bei der Reparatur eines motorangetriebenen Werkzeugs (2), insbesondere zum Ausführen eines Verfahrens nach einem der vorhergehenden Ansprüche, wobei das Werkzeug (2) ein Garten-, Forst- und/oder Bauwerkzeug ist, wobei das System (1) aufweist:
- eine Ermittlungseinrichtung (3), wobei die Ermittlungseinrichtung (3) zum Ermitteln von mindestens einer Betriebsrandbedingung (RB) des Werkzeugs (2), wobei das Werkzeug (2) unter dieser Betriebsrandbedingung (RB) zuvor nicht bestimmungsgemäß funktioniert hat, wobei die Betriebsrandbedingung (RB) eine meteorologische Kenngröße (MP) und/oder eine Höhe (HE) und/oder eine Position (PO) einer Betriebsumgebung (100) des Werkzeugs (2) aufweist, und von mindestens einer Betriebsbedingung (BB), insbesondere einer Betriebs-Drehzahl-Häufigkeitsverteilung (nHV), des Werkzeugs (2), insbesondere bis das Werkzeug (2) nicht bestimmungsgemäß funktioniert hat, ausgebildet ist,
- eine Bestimmungseinrichtung (4), wobei die Bestimmungseinrichtung (4) zum Bestimmen eines Satzes von möglichen Fehlersymptomen (mFS) des Werkzeugs (2) basierend auf der ermittelten Betriebsrandbedingung (RB) und der ermittelten Betriebsbedingung (BB) ausgebildet ist, und
- eine Ausgabeeinrichtung (5), wobei die Ausgabeeinrichtung (5) zum Ausgeben des bestimmten Satzes von möglichen Fehlersymptomen (mFS) ausgebildet ist, **gekennzeichnet durch** folgende Merkmale:
- wobei der Satz von möglichen Fehlersymptomen (mFS) benutzerauswählbar ist, und
- wobei die Ermittlungseinrichtung (3) zum Auswählen eines Fehlersymptoms (aFS) aus dem bestimmten benutzerauswählbaren Satz von möglichen Fehlersymptomen (mFS) ausgebildet ist,
- wobei die Bestimmungseinrichtung (4) zum Bestimmen eines Satzes von möglichen Fehlerursachen (mFU) des Werkzeugs (2) und/oder möglichen Reparaturhandlungsanweisungen (mRA) und/oder möglichen Ersatzteilen (mET) für das Werkzeug (2) basierend auf dem ausgewählten Fehlersymptom (aFS) ausgebildet ist, und
- wobei die Ausgabeeinrichtung (5) zum Ausgeben des bestimmten Satzes von möglichen Fehlerursachen (mFU) und/oder möglichen Reparaturhandlungsanweisungen (mRA) und/oder möglichen Ersatzteilen (mET) ausgebildet ist,
- wobei das Werkzeug (2) keinen Fehlersensor und/oder keinen Fehlerspeicher aufweist.

12. System (1) nach Anspruch 11, wobei das System (1) aufweist:
- das Werkzeug (2).

## Claims

1. Method for providing automated assistance with repairing a motor-driven tool (2), wherein the tool (2) is a garden tool, forestry tool and/or construction tool, wherein the method comprises the steps of:
a) ascertaining at least one boundary operating condition (RB) of the tool (2), wherein the tool (2) has previously not functioned properly under this boundary operating condition (RB), wherein the boundary operating condition (RB) has a meteorological characteristic variable (MP) and/or an altitude value (HE) and/or a position (PO) of an operating environment (100) of the tool (2), and at least one operating condition (BB), in particular an operating rotational speed frequency distribution (nHV), of the tool (2), in particular until the tool (2) has not functioned properly, by means of an ascertaining device (3),
b) determining a set of possible fault symptoms (mFS) of the tool (2) on the basis of the ascertained boundary operating condition (RB) and the ascertained operating condition (BB), and
c) outputting the determined set of possible fault symptoms (mFS),
**characterized by** following features:
- wherein the set of possible fault symptoms (mFS) can be selected by a user, and
- wherein the method comprises the steps of:
d) selecting a fault symptom (aFS) from the determined set of possible fault symptoms (mFS) which can be selected by a user,
e) determining a set of possible causes of faults (mFU) of the tool (2) and/or possible repair action instructions (mRA) and/or possible replacement parts (mET) for the tool (2) on the basis of the selected fault symptom (aFS), and
f) outputting the determined set of possible causes of faults (mFU) and/or possible repair action instructions (mRA) and/or possible replacement parts (mET),
- wherein the tool (2) does not have a fault sensor and/or does not have a fault memory.

2. Method according to Claim 1,
- wherein the meteorological characteristic variable (MP) has an air pressure value (LD), an air humidity value (LF), a precipitation value (NI) and/or a temperature value (TE).

3. Method according to one of the preceding claims,
- wherein the step a) comprises: ascertaining an altitude value (HE) and/or a position (PO) of an operating environment (100) of the tool (2) and ascertaining the meteorological characteristic variable (MP) on the basis of the ascertained height (HE) and/or the ascertained position (PO).

4. Method according to one of the preceding claims,
- wherein the tool (2) comprises an internal-combustion-engine drive system (10),
- wherein the internal-combustion-engine drive system (10) has previously not functioned properly under this boundary operating condition (RB),
- wherein the set of possible fault symptoms (mFS) and/or possible causes of faults (mFU) of the internal-combustion-engine drive system (10) and/or possible repair action instructions (mRA) and/or possible replacement parts (mET) is for the internal-combustion-engine drive system (10).

5. Method according to Claim 4,
- wherein the internal-combustion-engine drive system (10) comprises a mixture controller (11), in particular a carburettor (12), and/or a spark plug (13) and/or a valve (14), in particular a fuel inlet valve (15), and/or a clutch (16).

6. Method according to one of the preceding claims,
- wherein the tool (2) is a saw (2'), a pole-mounted pruner, a brush cutter, hedge shears, a hedge cutter, a blower, a leaf blower, branch shears (2"), an angle grinder, a sweeping implement, a sweeping roller, a sweeping brush, a lawnmower, a verticutter, a grass trimmer, a chopper, a stone cutter, a high pressure cleaner or a spraying device and/or sprayer.

7. Method according to one of the preceding claims,
- wherein the method comprises the step of: ascertaining a type (TW) of the tool (2), and
- wherein the method comprises: determining the set of possible fault symptoms (mFS) and/or possible causes of faults (mFU) and/or possible repair action instructions (mRA) and/or possible replacement parts (mET) on the basis of the ascertained type (TW).

8. Method according to Claim 7,
- wherein the ascertaining of the type (TW) of the tool (2) comprises: selecting the type (TW) of the tool (2) from a set of different types (TW, TW') of motor-driven tools (2).

9. Method according to one of the preceding claims, in particular according to Claim 7 and/or 8,
- wherein the determination comprises: selecting the set of possible fault symptoms (mFS) from a set of different fault symptoms (FS, FS', FS", FS‴), wherein the fault symptoms (FS, FS', FS", FS‴) are each assigned at least one boundary operating condition (RB, RB') from a set of different boundary operating conditions (RB, RB'), in particular and at least one type (TW, TW') of a tool (2) from a set of different types (TW, TW') of tools (2), and/or
- wherein the determination comprises: selecting the set of possible causes of faults (mFU) and/or possible repair action instructions (mRA) and/or possible replacement parts (mET) from a set of different causes of faults (FU, FU', FU", FU‴) and/or different repair action instructions (RA, RA', RA", RA‴) and/or different replacement parts (ET, ET', ET", ET‴), wherein the causes of faults (FU, FU', FU'', FU‴) and/or the repair action instructions (RA, RA', RA", RA‴) and/or the replacement parts (ET, ET', ET", ET‴) are each assigned at least one boundary operating condition (RB, RB') from a set of different boundary operating conditions (RB, RB') and/or at least one fault symptom (FS, FS') from a set of different fault symptoms (FS, FS'), in particular and at least one type (TW, TW') of a tool (2) from a set of different types (TW, TW') of tools (2).

10. Method according to Claim 9,
- wherein the method comprises the steps of:
- ascertaining an actual fault symptom (tFS) and/or an actual cause of a fault (tFU) of the tool (2) and/or an actual repair action instruction (tRA) and/or an actual replacement part (tET) for the tool (2), and
- assigning the at least one boundary operating condition (RB) to the actual ascertained fault symptom (tFS) and/or the at least one boundary operating condition (RB) and/or the fault symptom (aFS, tFS) to the actual ascertained cause of a fault (tFU) and/or to the actual ascertained repair action instruction (tRA) and/or to the actual ascertained replacement part (tET) for a subsequent execution of the method.

11. System (1) for providing automated assistance with repairing a motor-driven tool (2), in particular for executing a method according to one of the preceding claims, wherein the tool (2) is a garden tool, forestry tool and/or construction tool, wherein the system (1) comprises:
- an ascertaining device (3), wherein the ascertaining device (3) is designed to ascertain at least one boundary operating condition (RB) of the tool (2), wherein the tool (2) has previously not functioned properly under this boundary operating condition (RB), wherein the boundary operating condition (RB) has a meteorological characteristic variable (MP) and/or an altitude value (HE) and/or a position (PO) of an operating environment (100) of the tool (2), and at least one operating condition (BB), in particular an operating rotational speed frequency distribution (nHV), of the tool (2), in particular until the tool (2) has not functioned properly,
- a determining device (4), wherein the determining device (4) is designed to determine a set of possible fault symptoms (mFS) of the tool (2) on the basis of the ascertained boundary operating condition (RB) and the ascertained operating condition (BB), and
- an output device (5), wherein the output device (5) is designed to output the determined set of possible fault symptoms (mFS),
**characterized by** following features:
- wherein the set of possible fault symptoms (mFS) can be selected by a user, and
- wherein the ascertaining device (3) is designed to select a fault symptom (aFS) from the determined set of possible fault symptoms (mFS) which can be selected by a user,
- wherein the determining device (4) is designed to determine a set of possible causes of faults (mFU) of the tool (2) and/or possible repair action instructions (mRA) and/or possible replacement parts (mET) for the tool (2) on the basis of the selected fault symptom (aFS), and
- wherein the output device (5) is designed to output the determined set of possible causes of faults (mFU) and/or possible repair action instructions (mRA) and/or possible replacement parts (mET),
- wherein the tool (2) does not have a fault sensor and/or does not have a fault memory.

12. System (1) according to Claim 11, wherein the system (1) comprises:
- the tool (2).

## Revendications

1. Procédé d'assistance automatisée à la réparation d'un outil (2) entraîné par un moteur, l'outil (2) étant un outil de jardinage, un outil forestier et/ou un outil de construction, le procédé comprenant les étapes suivantes :
a) déterminer au moins une condition limite de fonctionnement (RB) de l'outil (2), l'outil (2) n'ayant pas fonctionné auparavant comme prévu sous cette condition limite de fonctionnement (RB), la condition limite de fonctionnement (RB) comprenant une caractéristique météorologique (MP) et/ou une hauteur (HE) et/ou une position (PO) d'un environnement de fonctionnement (100) de l'outil (2), et au moins une condition de fonctionnement (BB), en particulier une distribution de fréquence de régime de fonctionnement (nHV), de l'outil (2), en particulier jusqu'à ce que l'outil (2) n'ait pas fonctionné comme prévu, au moyen d'un dispositif de détermination (3),
b) déterminer un ensemble de symptômes de défaillance possibles (mFS) de l'outil (2) sur la base de la condition limite de fonctionnement déterminée (RB) et de la condition de fonctionnement déterminée (BB), et
c) délivrer l'ensemble déterminé de symptômes de défaillance possibles (mFS), **caractérisé par** les caractéristiques suivantes :
- l'ensemble de symptômes de défaillance possibles (mFS) est sélectionnable par l'utilisateur, et
- le procédé comprend les étapes consistant à :
d) sélectionner un symptôme de défaillance (aFS) à partir de l'ensemble déterminé, sélectionnable par l'utilisateur, de symptômes de défaillance possibles (mFS),
e) déterminer un ensemble de causes de défaillance possibles (mFU) de l'outil (2) et/ou des instructions de traitement de réparation possibles (mRA) et/ou des pièces de rechange possibles (mET) pour l'outil (2) sur la base du symptôme de défaillance sélectionné (aFS), et
f) émettre l'ensemble déterminé de causes de défaillance possibles (mFU) et/ou d'instructions de traitement de réparation possibles (mRA) et/ou de pièces de rechange possibles (mET),
- l'outil (2) ne comportant pas de capteur de défaillance et/ou de mémoire de défaillance.

2. Procédé selon la revendication 1,
- dans lequel la caractéristique météorologique (MP) comprend une pression atmosphérique (LD), une humidité (LF), une précipitation (NI) et/ou une température (TE).

3. Procédé selon l'une des revendications précédentes,
- dans lequel l'étape a) comprend : le fait de déterminer une altitude (HE) et/ou une position (PO) d'un environnement de fonctionnement (100) de l'outil (2) et déterminer la caractéristique météorologique (MP) sur la base de l'altitude (HE) déterminée et/ou de la position (PO) déterminée.

4. Procédé selon l'une des revendications précédentes,
- dans lequel l'outil (2) comprend un système d'entraînement par moteur à combustion interne (10),
- dans lequel le système d'entraînement par moteur à combustion interne (10) n'a pas fonctionné auparavant comme prévu dans cette condition limite de fonctionnement (RB),
- dans lequel l'ensemble de symptômes de défaillance possibles (mFS) et/ou de causes de défaillance possibles (mFU) du système d'entraînement à moteur à combustion interne (10) et/ou d'instructions de traitement de réparation possibles (mRA) et/ou de pièces de rechange possibles (mET) est pour le système d'entraînement à moteur à combustion interne (10).

5. Procédé selon la revendication 4,
- dans lequel le système d'entraînement de moteur à combustion interne (10) comprend un conditionneur de mélange (11), notamment un carburateur (12), et/ou une bougie d'allumage (13) et/ou une soupape (14), notamment une soupape (15) d'admission de carburant, et/ou un embrayage (16).

6. Procédé selon l'une des revendications précédentes,
- dans lequel l'outil (2) est une scie (2'), une élagueuse, une débroussailleuse, un taille-haie, un coupe-haie, un souffleur, un souffleur de feuilles, un élagueur (2"), une tronçonneuse à disque, une balayeuse, un rouleau de balayage, une brosse de balayage, une tondeuse à gazon, un scarificateur, une cisaille à herbe, un broyeur, un coupe-roche, un nettoyeur haute pression ou un appareil de pulvérisation et/ou d'aspersion.

7. Procédé selon l'une des revendications précédentes,
- ledit procédé comprenant l'étape consistant à : déterminer un type (TW) d'outil (2), et
- le procédé comprenant : le fait de déterminer l'ensemble des symptômes de défaillance possibles (mFS) et/ou des causes de défaillance possibles (mFU) et/ou des instructions de traitement de réparation possibles (mRA) et/ou des pièces de rechange possibles (mET) sur la base du type déterminé (TW).

8. Procédé selon la revendication 7,
- dans lequel la détermination du type (TW) de l'outil (2) comprend : la sélection du type (TW) de l'outil (2) parmi un ensemble de différents types (TW, TW') d'outils motorisés (2).

9. Procédé selon l'une des revendications précédentes, notamment selon la revendication 7 et/ou la revendication 8,
- dans lequel la détermination comprend : le fait de sélectionner l'ensemble des symptômes de défaillances possibles (mFS) parmi un ensemble de symptômes de défaillances différents (FS, FS', FS'', FS'''), les symptômes de défaillances (FS, FS', FS'', FS''') étant accompagnés chacun d'au moins une condition limite de fonctionnement (RB, RB') parmi un ensemble de différentes conditions limites de fonctionnement (RB, RB'), en particulier et au moins un type (TW, TW') d'un outil (2) parmi un ensemble de différents types (TW, TW') d'outils (2), et/ou
- dans lequel la détermination comprend : le fait de sélectionner l'ensemble de causes de défaillance possibles (mFU) et/ou d'instructions de traitement de réparation possibles (mRA) et/ou de pièces de rechange possibles (mET) dans un ensemble de différentes causes de défaillance (FU, FU', FU'', FU‴) et/ou de différentes instructions de traitement de réparation (RA, RA', RA", RA''') et/ou de différentes pièces de rechange (ET, ET', ET'', ET'''), les causes de défaillance (FU, FU', FU'', FU''') et/ou les instructions de traitement de réparation (RA, RA', RA'', RA''') et/ou les pièces de rechange (ET, ET', ET", ET‴) étant associées respectivement à au moins une condition limite de fonctionnement (RB, RB') d'un ensemble de conditions limites de fonctionnement différentes (RB, RB') et/ou à au moins un symptôme de défaillance (FS, FS') d'un ensemble de symptômes de défaillance différents (FS, FS'), à notamment et à au moins un type (TW, TW) d'un outil (2) d'un ensemble de types différents (TW, TW) d'outils (2).

10. Procédé selon la revendication 9,
- le procédé comprenant les étapes consistant à :
- déterminer un symptôme réel de défaillance (tFS) et/ou une cause réelle de défaillance (tFU) de l'outil (2) et/ou une instruction réelle d'action de réparation (tRA) et/ou une pièce de rechange réelle (tET) pour l'outil (2), et
- associer ladite au moins une condition de limite de fonctionnement (RB) au symptôme de défaillance réel déterminé (tFS) et/ou ladite au moins une condition de limite de fonctionnement (RB) et/ou le symptôme de défaillance (aFS, tFS) à la cause de défaillance réelle déterminée (tFU) et/ou à l'instruction d'action de réparation réelle déterminée (tRA) et/ou à la pièce de rechange réelle déterminée (tET) pour une exécution suivante du procédé.

11. Système (1) d'assistance automatisée à la réparation d'un outil motorisé (2), notamment pour la mise en œuvre d'un procédé selon l'une des revendications précédentes, l'outil (2) étant un outil de jardinage, forestier et/ou de construction, le système (1) comprenant :
- un dispositif de détermination (3), le dispositif de détermination (3) étant destiné à déterminer au moins une condition limite de fonctionnement (RB) de l'outil (2), l'outil (2) n'ayant pas fonctionné auparavant comme prévu sous cette condition limite de fonctionnement (RB), la condition de limite de fonctionnement (RB) comprenant une caractéristique météorologique (MP) et/ou une altitude (HE) et/ou une position (PO) d'un environnement de fonctionnement (100) de l'outil (2), et étant formée par au moins une condition de fonctionnement (BB), en particulier une distribution de fréquence de vitesse de rotation de fonctionnement (nHV), de l'outil (2), en particulier jusqu'à ce que l'outil (2) n'ait pas fonctionné comme prévu,
- un dispositif de détermination (4), le dispositif de détermination (4) étant conçu pour déterminer un ensemble de symptômes de défaillance possibles (mFS) de l'outil (2) sur la base de la condition de limite de fonctionnement déterminée (RB) et de la condition de fonctionnement déterminée (BB), et
- un dispositif de sortie (5), le dispositif de sortie (5) étant conçu pour délivrer l'ensemble déterminé de symptômes de défaillance possibles (mFS), **caractérisé par** les caractéristiques suivantes :
- l'ensemble de symptômes de défaillance possibles (mFS) étant sélectionnable par l'utilisateur, et
- le dispositif de détermination (3) étant conçu pour sélectionner un symptôme de défaillance (aFS) à partir de l'ensemble déterminé, sélectionnable par l'utilisateur, de symptômes de défaillance possibles (mFS),
- le dispositif de détermination (4) étant conçu pour déterminer un ensemble de causes de défaillance possibles (mFU) de l'outil (2) et/ou des instructions de traitement de réparation possibles (mRA) et/ou des pièces de rechange possibles (mET) pour l'outil (2) sur la base du symptôme de défaillance sélectionné (aFS), et
- dans lequel le dispositif de sortie (5) est conçu pour délivrer l'ensemble déterminé de causes de défaillance possibles (mFU) et/ou d'instructions de traitement de réparation possibles (mRA) et/ou de pièces de rechange possibles (mET),
- l'outil (2) ne comportant pas de capteur de défaillance et/ou de mémoire de défaillance.

12. Système (1) selon la revendication 11, dans lequel le système (1) comprend :
- l'outil (2).
